# EUROPEAN PATENT APPLICATION

(11) **EP 4 027 432 A1**
(43) Date of publication of application: **13.07.2022**
(21) Application number: 21215499.1
(22) Date of filing: 17.12.2021
(51) Int. Cl.: H01M 10/48, H01M 50/342, B60L 50/64, H01M 50/249, H01M 10/42

(54) **MARINE BATTERY WITH WATER INGRESS AND SHOCK DETECTION**

(30) Priority: 23.12.2020 US 202017133445
(71) Applicant: Brunswick Corporation, Mettawa, Illinois 60045 (US)
(72) Inventor: Gonring, Steven J., Slinger, WI 53086 (US)
(74) Representative: Sandersons

(57) **Abstract**

A marine battery system (102) configured to provide energy to a marine vehicle load (124) is provided. The marine battery system (102) includes a battery (104), an enclosure configured to at least partially encapsulate the battery (104), a temperature sensor (114) configured to detect temperature information within the enclosure, a pressure sensor (112) configured to detect pressure information within the enclosure, and a controller (108; 128) coupled to the temperature sensor (114) and the pressure sensor (112). The controller (108; 128) is configured to receive the temperature information from the temperature sensor (114), receive the pressure information from the pressure sensor (112), determine whether an enclosure breach condition has occurred based on a comparison of the temperature information and the pressure information, and in response to a determination that the enclosure breach condition has occurred, perform an enclosure breach mitigation action.

## Description

### FIELD

The present disclosure relates to battery systems for marine vessels, and particularly to systems and methods for detecting adverse marine battery conditions.

### BACKGROUND

U.S. Patent No. 10,326,124 discloses a device for removing water from a battery housing or a battery separator, comprising a body having a plurality of capillaries and electrodes for producing an electric field, and a control device for controlling the electric field for removing water through means of the capillaries, a battery housing, a battery separator, a battery system, a vehicle, a method, a computer program and a computer program product.

U.S. Patent Publication No. 2015/0357845 discloses a battery management system. A housing may contain one or more of an electric motor, a battery electrically coupled to the electric motor, and a sensor configured to detect a harmful environmental condition within the housing. Such sensors can detect a potentially harmful condition including but not limited to smoke, heat, water, or shock. A circuit may be coupled to the at least one sensor and configured to uncouple the battery from the motor and discharge the battery when the sensor detects the harmful environmental condition. If a potential problem with the internal environment of the cassette is detected, the cassette batteries can be effectively disconnected with the main output, thus disabling the motors. Furthermore, energy stored in the batteries can be slowly and safely discharged. In some embodiments, when a potential problem with the internal environment of the cassette is detected, the batteries can be discharged and permanently disabled. Illustrative embodiments disclose a battery management system implemented in a motorized watercraft.

U.S. Patent Publication No. 2013/0017421 discloses a battery system that monitors the status of a battery and ensures safe conditions under a range of events adversely affecting the safety of the battery cells, the battery pack or enclosure, or a vehicle housing the battery. In response to the safety event, the battery system provides one or more responses to secure the battery, disconnect the battery, extinguish a fire, or maintain a safe temperature. Upon detecting the safety event, a controller activates the safety device accordingly to ensure safe conditions.

The above patents and patent publications are hereby incorporated by reference in their entireties.

### SUMMARY

This Summary is provided to introduce a selection of concepts that are further described hereinbelow in the Detailed Description. This Summary is not intended to identify key or essential features of the claimed subject matter, nor is it intended to be used as an aid in limiting the scope of the claimed subject matter.

According to one implementation of the present disclosure, a marine battery system configured to provide energy to a marine vehicle load is provided. The marine battery system includes a battery, an enclosure configured to at least partially encapsulate the battery, a temperature sensor configured to detect temperature information within the enclosure, a pressure sensor configured to detect pressure information within the enclosure, and a controller coupled to the temperature sensor and the pressure sensor. The controller is configured to receive the temperature information from the temperature sensor, receive the pressure information from the pressure sensor, determine whether an enclosure breach condition has occurred based on a comparison of the temperature information and the pressure information, and in response to a determination that the enclosure breach condition has occurred, perform an enclosure breach mitigation action.

According to another implementation of the present disclosure, a power storage system for a marine vehicle is provided. The power storage system includes multiple marine battery systems configured to provide energy to a marine vehicle load. Each marine battery system includes a battery, an enclosure configured to at least partially encapsulate the battery, and an accelerometer configured to detect acceleration data within the enclosure. The power storage system further includes a controller coupled to each of the marine battery systems. The controller is configured to receive the acceleration information from each of the marine battery systems, determine whether an abnormal acceleration condition has occurred based on a comparison of the acceleration information from each of the marine battery systems, and in response to a determination that an abnormal acceleration condition has occurred, perform an acceleration mitigation action.

According to yet another implementation of the present disclosure, a method for operating a marine battery configured to provide energy to a marine vehicle load is provided. The method includes receiving, at a battery management system for the marine battery, pressure information from a pressure sensor located in a battery enclosure for the marine battery, receiving, at the battery management system, temperature information from a temperature sensor located in the battery enclosure, and comparing, at the battery management system, the pressure information and the temperature information. The method further includes determining, at the battery management system, whether an enclosure breach condition has occurred based on the comparison of the pressure information and the temperature information.

### BRIEF DESCRIPTION OF THE DRAWINGS

The present disclosure is described with reference to the following Figures. The same numbers are used throughout the Figures to reference like features and like components.
FIG. 1 is a block diagram illustrating a marine vessel including a marine battery system according to an exemplary implementation of the present disclosure.
FIG. 2 is a flow chart of a process for detecting an enclosure breach or pressure relief valve fault that may be performed by the marine battery system of FIG. 1.
FIG. 3 is a flow chart of a process for detecting a water intrusion condition that may be performed by the marine battery system of FIG. 1.
FIG. 4 is a flow chart of a process for detecting an acceleration damage condition that may be performed by the marine battery system of FIG. 1.
FIG. 5 is a flow chart of a process for detecting a wrong battery orientation condition that may be performed by the marine battery system of FIG. 1.
FIG. 6 is a block diagram illustrating another marine battery system that may be utilized in a marine vessel according to an exemplary implementation of the present disclosure.
FIG. 7 is a flow chart of a process for detecting an incorrect mounting orientation condition that may be performed by the marine battery system of FIG. 6.

### DETAILED DESCRIPTION

In the present description, certain terms have been used for brevity, clearness and understanding. No unnecessary limitations are to be inferred therefrom beyond the requirement of the prior art because such terms are used for descriptive purposes only and are intended to be broadly construed.

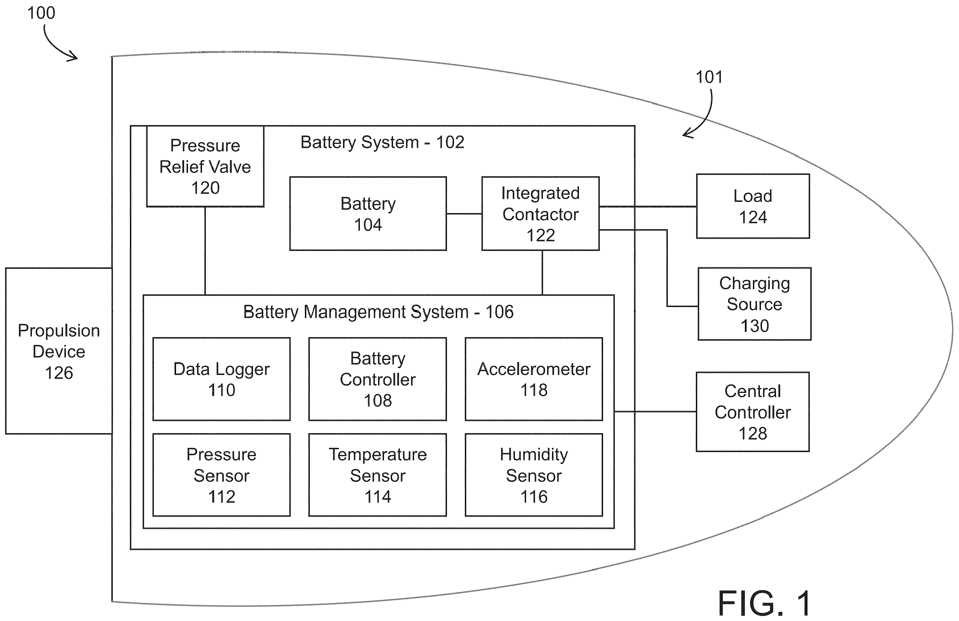

FIG. 1 depicts a marine vessel 100 with a power storage system 101 comprising at least one marine battery system 102 according to an exemplary implementation of the present disclosure. During research and experimentation, the present inventor has recognized that it is desirable to provide improved systems and methods for detecting and responding to adverse conditions to which a marine battery is particularly susceptible. Typically, lithium ion batteries that may be utilized in a marine vessel include an internal or external battery management system (BMS) that can monitor voltage, current, and temperature parameters of the battery and disconnect the battery if dangerous conditions exist. For example, the BMS will act to disconnect the battery if the battery temperature or current is too high, or if the battery voltage is too low or too high.

However, the present inventor has recognized the advantages inherent in monitoring additional battery parameters and utilizing these additional parameters to detect events that may be experienced by marine batteries due to their installation in marine vessels and proximity to water. For example, lithium ion batteries are susceptible to thermal runaway if water enters a sealed battery enclosure and reacts with lithium. Thermal runaway is a potentially catastrophic condition driven by a chain of exothermic reactions in which current flowing through the battery causes the battery temperature to rise, which in turn increases the current with a further rise in temperature. In a worst case scenario, thermal runaway can result in violent combustion or explosion. The power storage system 101 of the present disclosure substantially lowers the risk of a thermal runaway event by sensing various parameters (e.g., pressure and humidity within the battery enclosure) in addition to temperature within the battery enclosure. These additional parameters allow the BMS to detect damage to the battery enclosure soon after it occurs and prior to the battery entering a thermal runaway state.

The battery system 102 is shown to include, among other components, a battery 104, a battery management system 106, a pressure relief valve 120, and an integrated contactor 122. Each of the battery 104, the battery management 106, the pressure relief valve 120, and the integrated contactor 122 may be located or at least partially encapsulated within a common battery housing or enclosure. The battery 104 includes all the typical components of a battery cell, namely, a cathode, an anode, an electrolyte, and a separator. In an exemplary implementation, the battery 104 is a lithium ion battery with an intercalated lithium compound utilized as the cathodic material and graphite utilized as the anodic material. In some implementations, the battery system 102 includes a single battery cell 104. In other implementations, the battery system 102 includes multiple battery cells 104.

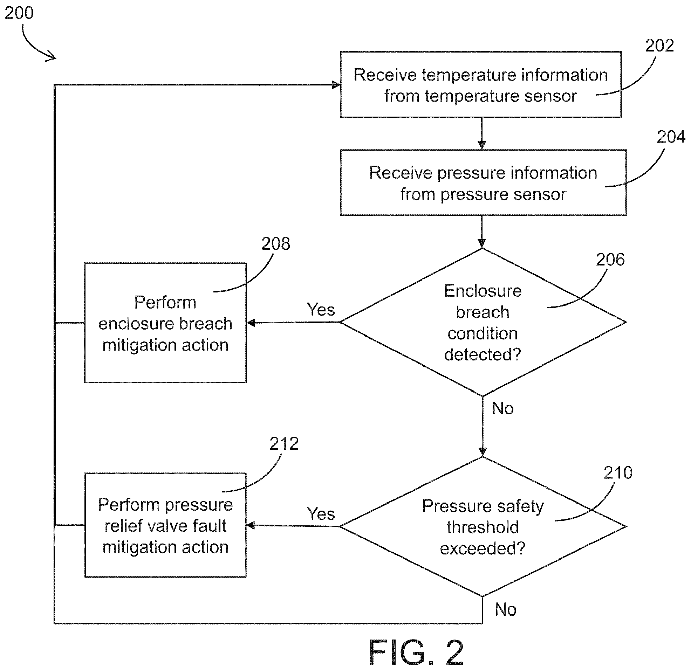

The battery management system 106 is shown to include a battery controller 108 and a data logger 110. In an exemplary implementation, each of the components of the battery management system 106 described herein are mounted on a common printed circuit board (PCB). The battery controller 108 may include both a processor or processing component and a rule storage or memory component. The rule storage or memory component may be any suitable storage mechanism, including, but not limited to, ROM, RAM, or flash memory. As described in further detail below with reference to FIGS. 2-5, the processing component of the battery controller 108 may execute various processes stored in the memory component to detect hazardous battery conditions and perform appropriate mitigation actions.

The data logger 110 may be configured to receive and store sensor information from various parameter sensors, described in further detail below. The data logger 110 may also be communicably coupled to the battery controller 108 such that the battery controller 108 executes various processes based on sensor information supplied by the data logger 110. In some implementations, sensor data stored in the data logger 110 may be utilized by a manufacturer to better understand the environmental conditions experienced by batteries in the field. In other implementations, sensor data stored in the data logger 110 may be utilized to support or dispute warranty claims for the battery made by a user to the manufacturer or seller of the battery. For example, the processes described below with reference to FIGS. 2-5 and 7 each involve, in some form, the detection and mitigation of an abnormal battery condition. The existence of these abnormal conditions and other associated information (e.g., timestamps indicating when the conditions were detected) may be stored in the data logger 110.

The battery management system 106 is further shown to include a pressure sensor 112, a temperature sensor 114, a humidity sensor 116, and an accelerometer 118. In an exemplary implementation, the battery management system 106 includes each of the pressure sensor 112, the temperature sensor 114, the humidity sensor 116, and the accelerometer 118. In other implementations, one or more of the pressure sensor 112, the temperature sensor 114, the humidity sensor 116, and the accelerometer 118 may be omitted from the battery management system 106.

The pressure sensor 112 may be configured to detect pressure information (e.g., pressure measurements) within the battery enclosure of the battery system 102. The pressure sensor 112 may be any suitable type of pressure sensor and is not particularly limited. In an exemplary implementation, the pressure sensor 112 is configured to measure absolute pressure within the battery enclosure of the battery system 102. As described in further detail below with reference to FIG. 2, the pressure sensor 112 may be utilized to detect both breaches in the battery enclosure and faults in the pressure relief valve 120 of the battery system 102.

The temperature sensor 114 may be configured to detect temperature information (e.g., temperature measurements) within the battery enclosure of the battery system 102. The temperature sensor 114 may be any suitable type of temperature sensor (e.g., thermocouple, resistance temperature detectors (RTDs), thermistors, and semiconductor-based integrated circuits) and is not particularly limited. As described in further detail below with reference to FIG. 2, the temperature sensor 114 may be utilized in concert with the pressure sensor 112 to detect breaches in the battery enclosure of the battery system 102.

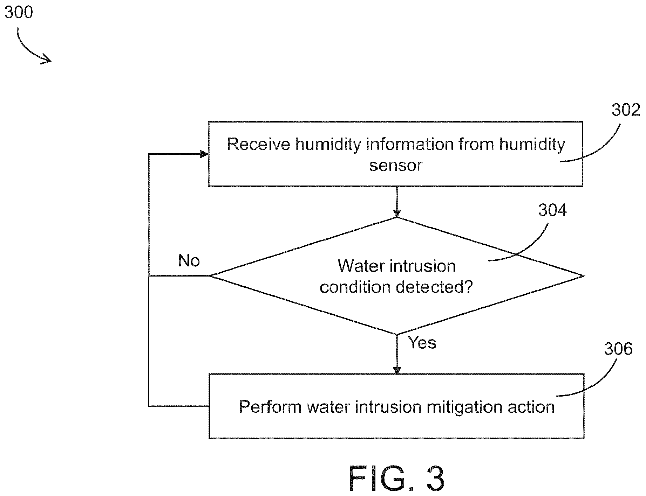

The humidity sensor 116 may be configured to detect humidity information (e.g., relative humidity measurements) within the battery enclosure of the battery system 102. The humidity sensor 116 may be any suitable type of humidity sensor (e.g., capacitive sensing, resistive sensing) and is not particularly limited. In some implementations, a moisture sensor or a water sensor may be utilized in place of the humidity sensor 116. As described in further detail below with reference to FIG. 3, the humidity sensor 116 may be utilized to detect water intrusion into the battery enclosure of the battery system 102.

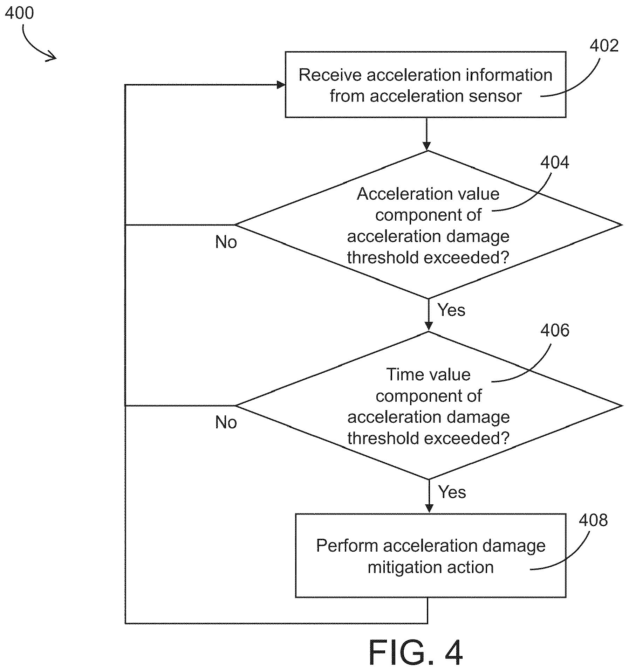

The accelerometer 118 may be configured to detect acceleration information (e.g., short or long duration dynamic motion measurements). The accelerometer 118 may be any suitable type of accelerometer (e.g., single axis, multi-axis, capacitive, resistive, piezoelectric) and is not particularly limited. In an exemplary implementation, the battery system 102 includes a single three axis accelerometer 118 that is mounted on the PCB of the battery management system 106. In other implementations, the accelerometer 118 is mounted directly on the battery enclosure or housing of the battery system 102. In still further implementations, the battery system 102 may include multiple accelerometers 118 mounted in various locations within the battery system 102. As described in further detail below with reference to FIGS. 4, 5, and 7, information supplied by the one or more accelerometers 118 may be utilized to detect various acceleration-related battery conditions, including battery drop conditions, collision or capsize conditions, and incorrect mounting conditions.

The battery system 102 is further shown to include a pressure relief valve 120. The pressure relief valve 120 is configured to remain closed under nominal conditions and to open to vent air from the battery enclosure if a pressure threshold within the battery enclosure is exceeded. In some implementations, the pressure relief valve 120 includes a membrane that permits air to flow through the pressure relief valve 120 when it is in the opened position, but does not permit water to enter the battery enclosure through the pressure relief valve 120. As described in further detail below with reference to FIG. 2, based on the pressure information received from the pressure sensor 112, the battery controller 108 may be configured to detect if the pressure relief valve 120 is malfunctioning.

Still referring to FIG. 1, the battery system 102 shown to include an integrated contactor 122. The integrated contactor 122 is shown to be coupled to the battery cell 104, a marine vessel load 124, and a charging source 130 such that the integrated contactor 122 acts as a switch between the battery cell 104, the marine vessel load 124, and the charging source 130. When the integrated contactor 122 is in a connected position, the battery cell 104 supplies energy to power the marine vessel load 124. When the integrated contactor 122 is in a disconnected position, the flow of energy from the battery cell 104 to the marine vessel load 124 or the charging source 130 to the battery cell 104 is interrupted.

The marine vessel load 124 may be any device or system on the marine vessel 100 that receives energy from the battery cell 104. For example, the marine vessel load 124 may include, but is not limited to, engine starting systems, audio systems, windlasses, depth finders, fish locators, and appliances. In further implementations, the battery system 102 may provide energy to a propulsion device 126 (e.g., an electric motor) that drives the marine vessel 100. The charging source 130 may be any source of power or interface component to a source of power that supplies energy to recharge the battery cell 104. For example, the charging source 130 could be an alternator or an interface to shore power (e.g., power supplied by a dock pedestal).

The integrated contactor 122 is shown to be communicably coupled to the battery controller 108 of the battery management system 106 such that the battery controller 108 causes the integrated contactor 122 to switch between the connected and disconnected positions. As described below with reference to FIGS. 2-5 and 7, the battery controller 108 may act to switch the integrated contactor 122 from the connected position to the disconnected position when information received from one or more of the pressure sensor 112, the temperature sensor 114, the humidity sensor 116, and the accelerometer 118 indicates that damage to the battery system 102, the load 124, the propulsion device 126, or any other component of the marine vessel 100 could occur if the flow of energy from the battery cell 104 to the load 124 or from the charging source 130 to the battery cell 104 is not interrupted.

The power storage system 101 is further shown to include a central controller 128 that is communicably coupled to the battery system 102. Similar to the battery controller 108, the central controller 128 may include both a processor or processing component and a rule storage or memory component. In some implementations, the central controller 128 may act as a supervisory controller for the power storage system 101, and may perform certain tasks that would otherwise be performed by the battery controller 108, including control of the integrated contactor 122. In further implementations, the central controller 128 may be communicably coupled to a marine vessel display that is configured to convey status information about the marine vessel 100 to a user.

Referring now to FIG. 2, a process 200 is depicted for detecting enclosure breach or pressure relief valve fault conditions. According to an exemplary implementation of the present disclosure, process 200 may be performed at least in part by the battery controller 108 of the battery management system 106. In other implementations, process 200 may be performed at least in part by the central controller 128. For the purposes of simplicity, process 200 will be described below exclusively with reference to the battery controller 108.

Process 200 is shown to commence with step 202, in which the battery controller 108 receives temperature information from a temperature sensor (e.g., temperature sensor 114). At step 204, the battery controller 108 receives pressure information from a pressure sensor (e.g., pressure sensor 112). In some implementations, the battery controller 108 receives the temperature information and the pressure information at specified intervals of time (e.g., one temperature measurement from the temperature sensor 114 and one pressure measurement from the pressure sensor 112 every five seconds). In other implementations, the battery controller 108 receives pressure and temperature measurements from the pressure sensor 112 and the pressure sensor 114 in a generally continuous manner.

At step 206, the battery controller 108 determines whether an enclosure breach condition has occurred. Under nominal conditions with a properly sealed battery enclosure, there is a positive correlation between the pressure and temperature measurements. In other words, if the temperature measurements indicate that the temperature within the battery enclosure is increasing, the pressure measurements should also indicate that the pressure within the battery enclosure is increasing. Conversely, if the temperature measurements indicate that the temperature within the battery enclosure is decreasing, the pressure measurements should also indicate that the pressure within the battery enclosure is decreasing. If the pressure measurements are static or unchanging while the temperature measurements are dynamic, this may cause the battery controller 108 to determine that the battery enclosure has been breached or otherwise damaged, and air is free to flow into and out of the battery enclosure.

If, at step 206, the battery controller 108 determines that the temperature and pressure information indicates that an enclosure breach condition has occurred, process 200 may proceed to step 208 and the battery controller 108 may perform an enclosure breach mitigation action. Because an enclosure breach can result in water intrusion, which can in turn lead to a thermal runaway event, the present inventor has recognized the advantages of alerting a user to the existence of an enclosure breach prior to water intrusion. In some implementations, the enclosure breach mitigation action may include the battery controller 108 transmitting a message (e.g., to central controller 128) to be displayed on a user device indicating a battery enclosure breach. This message may prompt the user to inspect and service the battery, if possible. In other implementations, the battery controller 108 may switch the integrated contactor 122 from the connected position to the disconnected position and interrupt the flow of energy from the battery cell 104 to the load 124. A severity of the enclosure breach may be determined based on an error between expected temperature and pressure values and the received temperature and pressure information. In some implementations, the battery controller 108 performs both actions. Once the battery controller 108 has performed the enclosure breach mitigation action or actions, process 200 reverts to step 202.

Returning to step 206, if the battery controller 108 does not determine that the temperature and pressure information indicates that an enclosure breach condition has occurred, process 200 proceeds to step 210. At step 210, the battery controller 108 determines whether a pressure safety threshold has been exceeded based on the pressure information received from the pressure sensor 112. If a pressure safety threshold is exceeded within the battery enclosure, this may indicate a fault in the pressure relief valve 120, and the battery controller 108 may perform a pressure relief valve fault mitigation action in step 212. In some implementations, the fault mitigation action may include the battery controller 108 transmitting a message to be displayed on a user device indicating a pressure relief valve fault. If the pressure information from the pressure sensor 112 is sufficiently high to indicate imminent damage to the battery, the battery controller 108 may switch the integrated contactor 122 from the connected position to the disconnected position and interrupt the flow of energy from the battery cell 104 to the load 124 or from the charging source 130 to the battery cell 104. Once the battery controller 108 has performed the pressure relief valve fault mitigation action or actions, process 200 concludes by reverting to step 202, as the battery controller 108 continues to receive pressure and temperature information from the sensors 112, 114.

Turning now to FIG. 3, a process 300 is depicted for detecting a water intrusion condition. According to an exemplary implementation of the present disclosure, process 300 may be performed at least in part by the battery controller 108 of the battery management system 106. In other implementations, process 300 may be performed at least in part by the central controller 128. Process 300 will be described below exclusively with reference to the battery controller 108. In some implementations, process 300 may be performed concurrently with or sequentially after process 200, described above with reference to FIG. 2. In other implementations, process 300 may be performed in the absence of process 200, for example, if the battery management system 106 includes a humidity sensor 116 and does not include a pressure sensor 112.

Process 300 is shown to commence with step 302, in which the battery controller 108 receives humidity information from a humidity sensor (e.g., humidity sensor 116). At step 304, the battery controller 108 determines whether a water intrusion condition has occurred. Under nominal conditions with a properly sealed battery enclosure, the relative humidity indicated by information received by the humidity sensor 116 should not exceed a threshold value. If the battery controller 108 determines that the relative humidity does not exceed a threshold value, process 300 reverts to step 302.

However, if the battery controller 108 determines at step 304 that the relative humidity does exceed a threshold value, this may indicate that the enclosure has been breached and water has entered the enclosure, putting the battery at risk of a thermal runaway event. Process 300 therefore proceeds to step 306, and the battery controller 108 may perform a water intrusion mitigation action. In some implementations, the water intrusion mitigation action may include the battery controller 108 transmitting a message to be displayed on a user device indicating a water intrusion condition. If the humidity information from the humidity sensor 116 is sufficiently high to indicate imminent damage to the battery, the battery controller 108 may switch the integrated contactor 122 from the connected position to the disconnected position and interrupt the flow of energy from the battery cell 104 to the load 124 or from the charging source 130 to the battery cell 104. Once the battery controller 108 has performed the water intrusion action or actions, process 300 concludes by reverting to step 302, as the battery controller 108 continues to receive humidity information from the humidity sensor 116.

Referring now to FIG. 4, a process 400 is depicted for detecting an acceleration damage condition. An acceleration damage condition may occur under a variety of scenarios, when the battery cell 104 is both connected and disconnected from the marine vessel load 124. For example, prior to connection to the marine vessel load 124, the battery system 102 may experience acceleration damage if the battery system 102 is dropped or otherwise mishandled in transport. Once connected to the marine vessel load 124, the battery system 102 may experience acceleration damage if the marine vessel 100 experiences a collision with another marine vessel or a physical obstacle. Accordingly, process 400 may be performed as part of a start up procedure for the battery system 102, as well as continuously while the marine vessel 100 is in operation.

According to an exemplary implementation of the present disclosure, process 400 may be performed at least in part by the battery controller 108 of the battery management system 106. In other implementations, process 400 may be performed at least in part by the central controller 128. Process 400 will be described below exclusively with reference to the battery controller 108.

Process 400 is shown to commence with step 402, in which the battery controller 108 receives acceleration information from one or more acceleration sensors (e.g., accelerometer 118). At step 404, the battery controller 108 determines whether the received acceleration information indicates that an acceleration value component of an acceleration damage threshold has been exceeded. If the acceleration value component has not been exceeded, process 400 reverts to step 402.

If, however, the battery controller 108 determines that an acceleration value component has been exceeded, process 400 advances to step 406 to determine if the received acceleration information indicates that the time value component has also been exceeded. The acceleration damage threshold includes both an acceleration value component and a time value component because both higher magnitude-shorter duration events (e.g., battery drops, collisions) and lower magnitude-longer duration acceleration events (e.g., improper securing of the battery in a marine vessel in rough sea conditions) can be similarly destructive. If the time value component has not been exceeded, process 400 reverts to step 402.

If the battery controller 108 determines that both the acceleration value component and the time value component of the acceleration damage threshold have been exceeded, process 400 may proceed to step 408, and the battery controller 108 may perform an acceleration damage mitigation action. Similar to processes 200 and 300 described above, the acceleration damage mitigation action may include one or both of transmitting a message to be displayed on a user device indicating an acceleration damage condition, and switching the integrated contactor 122 to interrupt the flow of energy from the battery cell 104 to the load 124. Once the battery controller 108 has performed one or both of these mitigation actions, process 400 concludes by reverting to step 402, as the battery controller 108 continues to receive acceleration information from the accelerometer 118.

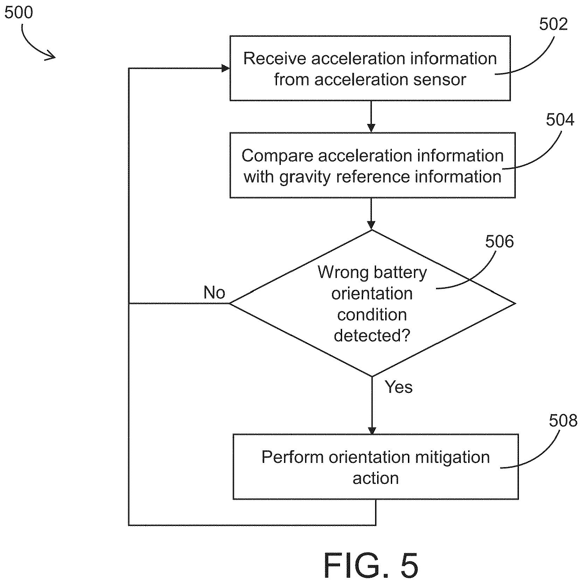

Turning now to FIG. 5, a process 500 is depicted for detecting a wrong battery orientation condition. A wrong battery orientation condition may occur under several scenarios. For example, the battery system 102 may be mistakenly installed upside down in the marine vessel 100. As another example, the battery system 102 along with the entire marine vessel 100 may rotate upside down if the marine vessel 100 capsizes. According to an exemplary implementation of the present disclosure, process 500 may be performed at least in part by the battery controller 108 of the battery management system 106. In other implementations, process 500 may be performed at least in part by the central controller 128. Process 500 will be described below exclusively with reference to the battery controller 108.

Process 500 is shown to commence with step 502, in which the battery controller 108 receives acceleration information from one or more acceleration sensors (e.g., accelerometer 118). At step 504, the battery controller 108 compares the acceleration information received from the accelerometer 118 with gravity reference information. The gravity reference information may be obtained using the accelerometer 118, which should indicate the acceleration of gravity in the vertical direction and close to zero acceleration in the other two directions orthogonal to the vertical direction. In an exemplary implementation, step 504 occurs at key-up when the boat is not moving and the battery is at rest. At step 506, the battery controller 108 determines whether the comparison indicates that the battery is in a wrong orientation condition. If the battery controller 108 determines that the comparison does not indicate a wrong orientation condition, process 500 reverts to step 502. If the battery controller 108 determines that the comparison does indicate a wrong orientation condition, process 500 proceeds to step 508.

At step 508, the battery controller 108 may perform an orientation mitigation action. Due to the severity of the scenarios experienced by the marine vessel 100 that result in a wrong orientation condition, unlike the processes 200-400 described above, the orientation mitigation action may not include transmitting a message to a user indicating the detected wrong orientation condition. Instead, the orientation mitigation action may simply include the battery controller 108 switching the integrated contactor 122 to interrupt the flow of energy from the battery cell 104 to the load 124. Process 500 then concludes by reverting to step 502.

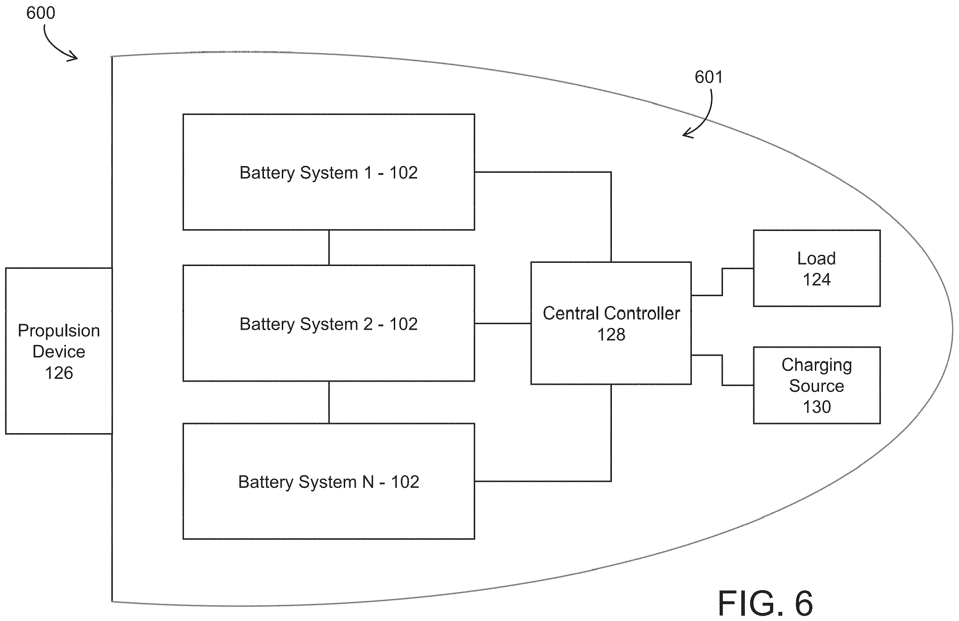

Referring now to FIG. 6, a marine vessel 600 is depicted with an alternative power storage system 601 comprising an arrangement of multiple battery systems 102. As shown, in addition to being coupled to a central controller 128, a load 124, and a charging source 130, the battery systems 102 are communicably coupled to each other. In some implementations, the central controller 128 may be omitted and one of the battery controllers 108 may act as a supervisory controller to the other battery systems 102, both in receiving sensor information from the other battery systems 102, and in controlling the integrated contactors 122 of the other battery systems 102 to interrupt the flow of energy to the load 124 or from the charging source 130. In other implementations, all sensor information is transmitted from the battery systems 102 to the central controller 128, and the central controller 128 acts to control the integrated contactors 122 of the battery systems 102 when necessary.

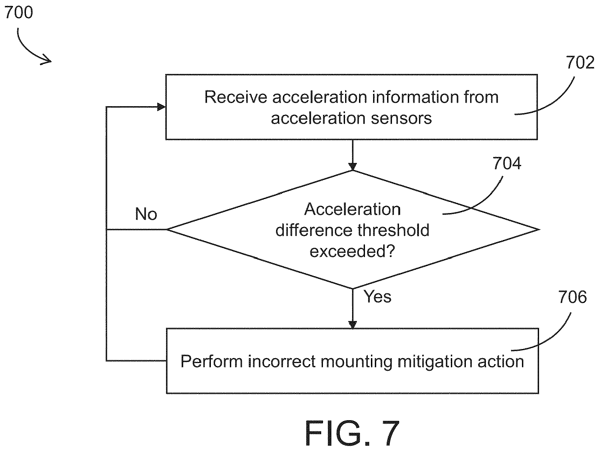

Turning now to FIG. 7, a process 700 is depicted for detecting an incorrect battery mounting condition. An incorrect battery mounting condition may occur if one or more of the battery systems 102 is not securely installed in the marine vessel (e.g., marine vessel 100, 600), resulting in unexpected vibration experienced by the improperly installed battery systems 102. Over time, this excess vibration may result in damage to the improperly installed battery system 102. In an exemplary implementation, process 700 is performed at least in part by the central controller 128. In other implementations, the process 700 is performed at least in part by a battery controller 108 of the one or more battery systems 102. Process 700 will be described below exclusively with reference to the central controller 128.

Process 700 is shown to commence with step 702, in which the central controller 128 receives acceleration information from accelerometers (e.g., accelerometers 118) located within the enclosures of each of the individual battery systems 102. At step 704, the central controller 128 (or the battery controller 108 acting as a supervisory controller) determines whether the acceleration information from any of the battery systems 102 exceeds an acceleration difference threshold that indicates that a battery system 102 is experiencing a higher level of shock or vibration as compared with the other battery systems 102, or as compared with a nominal vibration level that may be stored in the memory of the central controller 128. In still further implementations, the acceleration difference threshold may be calculated based on acceleration data received from another accelerometer that is mounted on a portion of the marine vessel external to the battery systems 102. The acceleration difference threshold may include both an acceleration value component and a time value component. In this way, the abnormal vibration must be sustained for at least a minimum period of time to ensure that transient events are not detected as improper mounting.

If the central controller 128 detects that one or more the battery systems 102 exceeds the difference threshold, process 700 advances to step 702 and the central controller 128 performs one or more incorrect mounting mitigation actions for the battery systems 102 exceeding the difference threshold. The actions can include transmitting a message to a be displayed on a user device indicating that one or more battery systems 102 are incorrectly installed and must be serviced, and/or disconnecting the affected battery systems 102 from the load 124. Upon performing the mitigation actions at step 706, process 700 reverts to step 702.

In the present disclosure, certain terms have been used for brevity, clearness and understanding. No unnecessary limitations are to be implied therefrom beyond the requirement of the prior art because such terms are used for descriptive purposes only and are intended to be broadly construed. The different systems and methods described herein may be used alone or in combination with other systems and devices. Various equivalents, alternatives and modifications are possible within the scope of the appended claims.

## Claims

1. A marine battery system (102) configured to provide energy to a marine vehicle load (124), comprising:
a battery (104);
an enclosure configured to at least partially encapsulate the battery (104);
a temperature sensor (114) configured to detect temperature information within the enclosure;
a pressure sensor (112) configured to detect pressure information within the enclosure; and
a controller (108; 128) coupled to the temperature sensor (114) and the pressure sensor (112), wherein the controller (108; 128) is configured to:
receive the temperature information from the temperature sensor (114);
receive the pressure information from the pressure sensor (112);
determine whether an enclosure breach condition has occurred based on a comparison of the temperature information and the pressure information; and
in response to a determination that the enclosure breach condition has occurred, perform an enclosure breach mitigation action.

2. The marine battery system (102) of claim 1, wherein:
the enclosure breach mitigation action comprises transmitting an enclosure breach message to an operator; and/or
the enclosure breach mitigation action comprises disconnecting the marine battery system (102) from the marine vehicle load (124).

3. The marine battery system (102) of claim 1 or 2, wherein the enclosure comprises a pressure relief valve (120) configured to open when a pressure within the enclosure exceeds a pressure safety threshold.

4. The marine battery system (102) of claim 3, wherein the controller (108; 128) is further configured to:
determine whether a pressure relief valve fault has occurred based on a comparison of the pressure information and the pressure safety threshold;
in response to a determination that the pressure relief valve fault has occurred, perform a pressure relief valve fault mitigation action.

5. The marine battery system (102) of any one of the preceding claims, further comprising a humidity sensor (116) configured to detect humidity data within the enclosure, wherein the controller (108; 128) is further configured to determine whether a water intrusion condition has occurred based on the humidity data, optionally wherein the controller (108; 128) is further configured to perform a water intrusion mitigation action in response to a determination that a water intrusion condition has occurred.

6. The marine battery system (102) of any one of the preceding claims, further comprising an accelerometer (118) configured to detect acceleration information within the enclosure, wherein the controller (108; 128) is further configured to perform an acceleration mitigation action in response to a determination than an abnormal acceleration condition has occurred.

7. The marine battery system (102) of claim 6, wherein the abnormal acceleration condition is a battery drop condition, and wherein determination that the battery drop condition has occurred is based on the acceleration information exceeding an acceleration damage threshold, optionally wherein the acceleration damage threshold includes both an acceleration value component and a time value component.

8. The marine battery system (102) of claim 6, wherein the abnormal acceleration condition is a collision condition, and wherein determining that the collision condition has occurred is based on the acceleration information exceeding an acceleration damage threshold.

9. The marine battery system (102) of claim 6, wherein the abnormal acceleration condition is a wrong orientation condition, and wherein determining that the wrong orientation condition has occurred is based on a comparison of the acceleration information with gravity reference data.

10. A power storage system for a marine vehicle (600), comprising:
a plurality of marine battery systems (102) configured to provide energy to a marine vehicle load (124), each marine battery system (102) comprising
a battery (104);
an enclosure configured to at least partially encapsulate the battery (104);
an accelerometer (118) configured to detect acceleration information within the enclosure; and
a controller (108; 128) coupled to each of the plurality of marine battery systems (102), wherein the controller (108; 128) is configured to:
receive the acceleration information from each of the plurality of marine battery systems (102);
determine whether an abnormal acceleration condition has occurred based on a comparison of the acceleration information from each of the plurality of marine battery systems (102); and
in response to a determination that an abnormal acceleration condition has occurred, perform an acceleration mitigation action.

11. The power storage system of claim 10, wherein:
the acceleration mitigation action comprises transmitting an abnormal acceleration condition message to an operator; and/or
the acceleration mitigation action comprises disconnecting the plurality of marine battery systems (102) from the marine vehicle load (124).

12. The power storage system of claim 10 or 11, wherein the abnormal acceleration condition is an incorrect mounting condition, and wherein determining that the incorrect mounting condition has occurred is based on the acceleration information from at least one of the plurality of marine battery systems (102) exceeding a difference threshold, optionally wherein the difference threshold includes both an acceleration value component and a time value component.

13. The power storage system of claim 12, wherein the difference threshold is based in part on acceleration information received from a marine vehicle accelerometer mounted on a component of the marine vehicle (600) that is external to the plurality of marine battery systems (102).

14. A method for operating a marine battery (104) configured to provide energy to a marine vehicle load (124), the method comprising:
receiving, at a battery management system (106) for the marine battery (104), pressure information from a pressure sensor (112) located in a battery enclosure for the marine battery (104) ;
receiving, at the battery management system (106), temperature information from a temperature sensor (114) located in the battery enclosure;
comparing, at the battery management system (106), the pressure information and the temperature information; and
determining, at the battery management system (106), whether an enclosure breach condition has occurred based on the comparison of the pressure information and the temperature information.

15. The method of claim 14, further comprising:
performing, at the battery management system (106), an enclosure breach mitigation action.
